# EUROPEAN PATENT SPECIFICATION

(11) **EP 1 416 205 B1**
(45) Date of publication and mention of the grant of the patent: **28.12.2005**
(21) Application number: 02425658.8
(22) Date of filing: 30.10.2002
(51) Int. Cl.: F16K 25/00

(54) **A homogenization valve with high abrasive resistance**
Homogenisierventil mit hohem Abrasivwiderstand
Soupape d'homogénéisation avec haute résistance à abrasion

(43) Date of publication of application: 06.05.2004
(73) Proprietor: Bertoli S.r.l., 43040 Vicofertile, Parma (IT)
(72) Inventor: Catelli, Roberto, 43100 Parma (IT); Barusi, Ercole, 43015 Noceto, Parma (IT)
(74) Representative: Gotra, Stefano

(56) References cited:
- EP-A- 0 520 567
- DE-A- 3 728 946
- US-A- 5 217 037

## Description

The valve of the invention is usefully but not exclusively applicable in the field of homogenizers destined for treating highly abrasive foods, for example chocolate products, fruit and tomato juice products, nectars, fats and so on. In general, the valve is usefully applicable in homogenizers functioning at high pressure (for example, at more than 300 bar).

Homogenizers have been well-known for some time, and are used in homogenizing emulsions and suspensions. Very briefly, they are constituted by a pump which forces the product to be treated to pass through the narrow passage aperture of a homogenization valve. The homogenization operation of a product, for example, milk, consists substantially in the fine sub-division of the fat cells and their homogeneous dispersion throughout the mass of the liquid.

The product is at high temperature when it enters the valve and is subject to high pressure so that it can overcome the pressure which tends to close the valve, which results in considerable acceleration of the product, which flows through the valve aperture at high speed. The movement of the product through the valve aperture causes high abrasion levels which in known-type valves lead to rapid wear of the valve parts coming into contact with the product passing through the valve.

The valve aperture size must be rigorously kept constant, so the materials the valves are made of have to have practically zero expansion and deformation properties at working temperatures.

In known-type valves the obturator and the valve seating are made of tungsten carbide. This material, which has excellent expansion and deformation characteristics, is also strongly resistant to abrasion at not-very-high working pressures and for not-very-abrasive products, such as for example pasteurised milk, sterilized milk and yoghurt. For more abrasive products, and at high working pressures, obturators and the seatings made of tungsten carbide deteriorate rather rapidly and must therefore be frequently substituted.

Document DE 3728946 discloses a homogeniser having valve components, an obturator and a seat, joined with formation of an inlet chamber, an outlet chamber and at least one homogenisation gap connecting these chambers. The homogeniser is furnished with a continuous diamond sinter layer on the homogenisation-gap-forming surfaces of the valve components and, if required, of at least one baffle. The continuous diamond sinter layer, in the homogenisation-gap-forming surface of the obturator, is in the form of a disc inserted into a seat afforded into a frontal surface of the obturator such that a ring portion of the obturator surrounds the disc. This ring portion of the obturator is subjected to the abrasive action of the high speed flowing products which leads the reing portion to a rapid wear.

The main aim of the present invention is to provide a homogenization valve which is particularly resistant to the abrasive effect of the product being processed.

An advantage of the present invention is that it provides a valve which can be used in substitution for traditional valves at present used in homogenizers. These aims and advantages and more besides are all attained by the present invention, as it is characterised in the appended claims.

Further characteristics and advantages of the present invention will better emerge from the detailed description that follows of a preferred but non-exclusive embodiment of the valve, illustrated purely by way of a non-limiting example in the accompanying figures of the drawings, in which:
figure 1 is a section in vertical elevation of the homogenization valve of the invention;
figure 2 is a section in vertical elevation and in enlarged scale of the area of the valve around the aperture.

The homogenization valve of the invention, which is used in homogenizers of known type and not illustrated in the figures of the drawings, exhibits an inlet conduit 1 for the product to be homogenized and an outlet zone 5 for the homogenized product, which inlet and outlet are respectively upstream and downstream of the outlet aperture 2 of the valve. The valve comprises a seating 3, fixed in the valve body 11, on which an obturator 4 is forced at a predetermined pressure, so that when the pressurised fluid to be homogenized is pumped through the valve and pushes against the obturator, an outlet aperture 2 of the valve is defined. The seating 3 and the obturator 4 of the valve are made of tungsten carbide.

As happens in known-type valves, the distance between the facing surfaces of the seating and the obturator, i.e. the width of the valve outlet aperture, is determined by the state of equilibrium between the forces acting on the obturator.

The seating 3 and the obturator 4 of the valve face each other at an annular surface along an external circumference and an internal circumference of which the outlet aperture 2 of the valve develops.

In the valve of the invention, a ring 6 and a disc 8 are respectively connected to the seating 3 surface and the obturator 4 surface (which face one another and define the outlet aperture 2), and are of such a size that they entirely cover the surfaces. Both the ring 6 and the disc 8 are made by a superposing and joining of two layers of different materials. In particular, the ring 6 and the disc 8 each comprise an inner layer, respectively 6 and 8a, made of tungsten carbide, which is the same material used to make the seating 3 and the obturator 4. This inner layer is solidly constrained to the relative surface by welding, using a silver and copper alloy. The welding operation is made easier and more effective if the surfaces to be welded are first chemically washed, using known-type solvents, so that any presence of substances reacting to the welding alloy are removed.

The ring 6 and the disc 8 further each comprise an outer layer, respectively 6b and 8b, made of a synthetic polycrystalline diamond. The outer layers, very hard and resistant to abrasion, are the surface on which the product moves during the operation of the homogenizer.

The joining of the two layers which make up the ring 6 and the disc 8 is achieved using known processes.

The inner layers of the ring 6 and the disc 8 exhibit a breadth comprised between 2.7 and 1 mm. In particular, the inner layers are 1.1 mm thick. The outer layers 6b and 8b of the ring 6 and the disc 8 are 0.5 mm thick.

The disc 8 also exhibits, on its external circumference, a circumferential bevelling inclined by 45° and 0.3 mm thick. The bevelling, the function of which is to ease the outflow of the product from the valve, is entirely fashioned from the outer layer of the disc 8 and neither discovers the inner layer of the disc 8 nor the surface of the obturator.

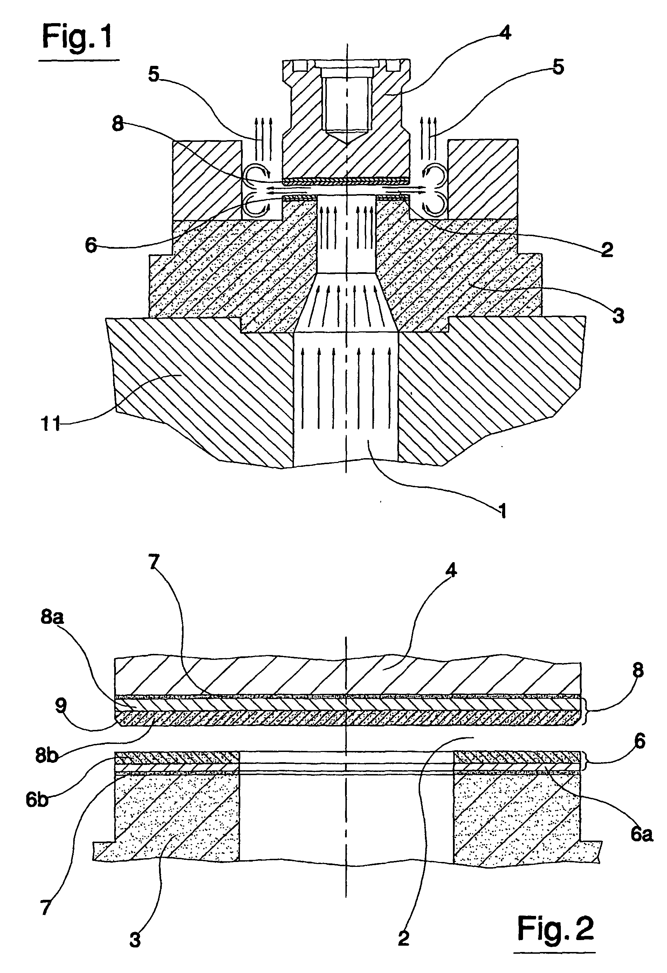

Apart from having a better abrasive resistance, the homogenizing valve of the invention has the same way of operating as known-type valves. Very briefly, the product, following the direction indicated in figure 1 by the arrow and arriving at the valve inlet at high pressure, raises the obturator of the valve, which is also subject to a high pressure which tends to close the valve. The liquid product exits through the narrow valve aperture which is created following the raising of the obturator.

The valve, as mentioned herein above, has the primary advantage of having the same overall external dimensions as a known-type valve, which means that it can be substituted for a traditional valve with no need for structural changes to the homogenizer already fitted with known valves.

The valve of the invention offers the considerable advantage that the surfaces struck at high speed by the product, i.e. the surfaces defining the valve aperture, are very much harder than those already hard surfaces in the prior art made of tungsten carbide. They therefore have a considerably longer working life.

The construction of the ring 6 and the disc 8 as separate pieces and their subsequent connection respectively to the seating and the obturator of the valve means that realizing these particularly hard surfaces is very easy. Once the external surfaces of the ring 6 and the disc 8 are worn, the parts can be replaced without having to substitute the seating and obturator of the valve.

As the synthetic polycrystalline diamond and the tungsten carbide exhibit the same expansion factor (practically zero), if they are subjected to high temperatures and pressure, no internal pressures are generated in the ring and disc; a presence of such internal pressures could have repercussions on the size of the valve aperture. Further, the presence of the silver/copper alloy from the welding operation acts as a sort of "expansion joint", as it is able to absorb any even minimal tensions that might be generated between, respectively, the ring and the seating and between the disc and the valve obturator.

## Claims

1. A homogenization valve, comprising: a seating (3) and an obturator (4) having reciprocally facing surfaces which are distanced in order to define a valve outlet aperture (2); an inlet conduit (1) for the product to be homogenized and an outlet zone (5) for the product when homogenized, the inlet conduit (1) being located upstream and the outlet zone (5) being located downstream of the outlet aperture (2) of the valve;
a ring (6) and a disc (8) connected respectively to, a surface of the seating (3) and a surface of the obturator (4), which seating (3) and which obturator (4) face one another to form the valve outlet aperture (2); the ring (6) and the disc (8) each comprising an inner layer (6a, 8a) made of a same material of which the seating (3) and the obturator (4) are made, and each comprising an outer layer (6b, 8b) made of a synthetic crystalline diamond; the inner layer (6a, 8a) being solidly constrained respectively to the surface of the seating (3) and the surface of the obturator (4) **characterized in that** the ring (6) and the disc (8) are connected by means of welding; said ring (6) and disc (8) being sized such that they entirely cover the respective surface of the seating (3) and of the obturator (4).

2. The valve of claim 1, **characterised in that** the inner layers (6a, 8a) of the ring (6) and the disc (8) are made of tungsten carbide.

3. The valve of claim 1, **characterised in that** the solid constraint between the ring (6) and the disc (8) and the relative surfaces of the seating (3) and the obturator (4) is achieved by means of welding using a silver-copper alloy.

4. The valve of claim 3, **characterised in that** the inner layer (6a, 8a) of the ring (6) and the disc (8) is of a thickness comprised between 2.7 mm and 1.1 mm and the outer layer (6b, 8b) of a thickness of 0.5 mm.

5. The valve of claim 1, **characterised in that** the inner layer (6a, 8a) is 1.1 mm. thick.

6. The valve of claim 1, **characterised in that** the disc (8) exhibits, on an external circumference thereof, a circumferential bevelling of 45° angulation with a breadth of 0.3 mm.

## Patentansprüche

1. Homogenisierventil, enthaltend: einen Sitz (3) und einen Verschluss (4) mit einander zugewandten Oberflächen, welche einen Abstand voneinander haben, um eine Auslassöffnung (2) des Ventils zu beschreiben; eine Einlassleitung (1) für das zu homogenisierende Produkt und einen Auslassbereich (5) für das Produkt, wenn es homogenisiert ist, wobei die Einlassleitung (1) stromaufwärts und der Auslassbereich (5) stromabwärts der Auslassöffnung (2) des Ventils angeordnet sind; einen Ring (6) und eine Scheibe (8), jeweils verbunden mit einer Oberfläche des Sitzes (3) und einer Oberfläche des Verschlusses (4), welcher Sitz (3) und welche Oberfläche (4) einander zugewandt sind, um die Auslassöffnung (2) des Ventils zu bilden; wobei der Ring (6) und die Scheibe (8) eine innere Schicht (6a, 8a) aus demselben Material enthalten, aus welchem der Sitz (3) und der Verschluss (4) hergestellt sind, und jeweils eine äussere Schicht (6b, 8b) enthalten, hergestellt aus synthetischem kristallinen Diamant; wobei die innere Schicht (6a, 8a) fest jeweils an der Oberfläche des Sitzes (3) und an der Oberfläche des Verschlusses (4) angebracht ist, **dadurch gekennzeichnet, dass** der Ring (6) und die Scheibe (8) durch Verschweissen befestigt sind; wobei der genannte Ring (6) und die Scheibe (8) so bemessen sind, dass sie vollständig die jeweilige Oberfläche des Sitzes (3) und des Verschlusses (4) abdecken.

2. Ventil nach Patentanspruch 1, **dadurch gekennzeichnet, dass** die innere Schicht (6a, 8a) des Ringes (6) und der Scheibe (8) aus Wolframkarbid hergestellt ist.

3. Ventil nach Patentanspruch 1, **dadurch gekennzeichnet, dass** die solide Befestigung zwischen dem Ring (6) und der Scheibe (8) und den entsprechenden Oberflächen des Sitzes (3) und des Verschlusses (4) durch Verschweissen unter Verwendung einer Silber-Kupfer-Legierung erhalten ist.

4. Ventil nach Patentanspruch 3, **dadurch gekennzeichnet, dass** die innere Schicht (6a, 8a) des Ringes (6) und der Scheibe (8) von einer Stärke ist, die zwischen 2,7 mm und 1,1 mm liegt, und die äussere Schicht (6b, 8b) von einer Stärke von 0,5 mm.

5. Ventil nach Patentanspruch 1, **dadurch gekennzeichnet, dass** die innere Schicht (6a, 8a) eine Stärke von 1,1 mm hat.

6. Ventil nach Patentanspruch 1, **dadurch gekennzeichnet, dass** die Scheibe (8) an ihrem äusseren Umlauf eine umlaufende Abschrägung von einem 45°-Grad-Winkel mit einer Breite von 0,3 mm aufweist.

## Revendications

1. Soupape d'homogénéisation, comprenant: une base (3) et un obturateur (4) présentant des surfaces réciproquement opposées et espacées de manière à définir une ouverture de sortie (2) de la soupape; un conduit de sortie (1) pour le produit à homogénéiser et une zone de sortie (5) pour le produit homogénéisé, le conduit d'entrée (1) étant situé en amont de la zone de sortie (5) disposée en aval de l'ouverture de sortie (2) de la soupape;
un anneau (6) et un disque (8) reliés respectivement à une surface de la base (3) et une surface de l'obturateur (4), lesdits base (3) et obturateur (4) se faisant face pour former l'ouverture de sortie de la soupape (2); l'anneau (6) et le disque (8) comprenant chacun une couche interne (6a, 8a) réalisée dans le même matériau que celui de la base (3) et de l'obturateur (4), et comprenant chacun une couche externe (6b, 8b) réalisée en un diamant cristallin synthétique; la couche interne (6a, 8a) étant solidaire respectivement de la surface de la base (3) et de la surface de l'obturateur (4), **caractérisée en ce que** l'anneau (6) et le disque (8) sont connectés au moyen d'une soudure; lesdits anneau (6) et disque (8) étant dimensionnés de manière à recouvrir totalement la surface respective de la base (3) et de l'obturateur (4).

2. Soupape selon la revendication 1, **caractérisée en ce que** les couches internes (6a, 8a) de l'anneau (6) et du disque (8) sont réalisées en carbure de tungstène.

3. Soupape selon la revendication 1, **caractérisée en ce que** la liaison solide entre l'anneau (6) et le disque (8) et les surfaces relatives de la base (3) et de l'obturateur (4) est réalisée au moyen d'une soudure utilisant un alliage argent-cuivre.

4. Soupape selon la revendication 3, **caractérisée en ce que** la couche interne (6a, 8a) de l'anneau (6) et du disque (8) est d'une épaisseur comprise entre 2,7 mm et 1,1 mm et la couche externe (6b, 8b) est d'une épaisseur de 0,5 mm.

5. Soupape selon la revendication 1, **caractérisée en ce que** la couche interne (6a, 8a) est épaisse de 1,1 mm.

6. Soupape selon la revendication 1, **caractérisée en ce que** le disque (8) présente, sur sa circonférence externe, un chanfrein circonférentiel incliné de 45° et d'une épaisseur de 0,3 mm.
